# DEMANDE DE BREVET EUROPEEN

(11) **EP 2 061 116 A1**
(43) Date de publication de la demande: **20.05.2009**
(21) Numéro de dépôt: 08168943.2
(22) Date de dépôt: 12.11.2008
(51) Int. Cl.: H01M 10/44, H02J 7/00, H02J 7/34

(54) **Perfectionnement au domaine des éléments de stockage d'énergie**

(30) Priorité: 13.11.2007 FR 0758973
(71) Demandeur: Peugeot Citroën Automobiles SA, 78140 Vélizy-Villacoublay (FR)
(72) Inventeur: ROLLAND, Guillaume, 78380, BOUGIVAL (FR)
(74) Mandataire: Ménès, Catherine

(57) **Abrégé**

La présente invention a pour objet des cellules élémentaires destinées à être associées les unes avec les autres, chaque cellule élémentaire comportant une ligne de puissance reliant deux bornes de connexion, une unité de stockage électrique reliée aux bornes de la ligne de puissance par l'intermédiaire d'au moins un commutateur et d'une ligne de commande pour commander le ou les commutateurs, apte à être reliée à d'autres lignes de commande. En reliant un module formé par la mise en série ou en parallèle de cellules, on peut charger l'ensemble des unités de stockage progressivement, en opérant une série decommutation/décommutation pour incrémenter progressivement la charge de chacune des cellules unitaires, jusqu'à un niveau proche mais inférieur à sa tension unitaire maximale u_{n,max} la somme des tensions unitaires des unités de stockages pouvant devenir supérieure à la tension U.

## Description

La présente invention concerne le domaine des éléments de stockage électrique, notamment des éléments de stockage d'énergie du type batteries ou du type supercondensateurs. Ces derniers sont également connus sous le terme de super- ou ultra-capacités ou encore UCAP et sont particulièrement destinés aux applications de forte puissance. La présente invention concerne plus particulièrement la charge et la décharge de tels éléments.

Les applications de la présente invention sont, par exemple, dans le domaine des transports (véhicules hybrides, tramways, bus, etc.), de l'alimentation électrique (éoliennes) ou encore plus particulièrement dans des domaines où des pointes de consommation électriques peuvent nécessiter de supplémenter l'énergie fournie par une batterie ou un réseau.

La technologie de stockage d'énergie par des supercondensateurs repose sur le principe de fonctionnement des condensateurs classiques, et offre ainsi des performances en densités d'énergie relativement faibles mais avec une capacité au stockage / déstockage en fortes puissances. Ces supercondensateurs s'apparent ainsi fonctionnellement aux batteries électrochimiques qui équipent notamment les véhicules automobiles. Les supercondensateurs supportent un nombre de cycles de charge et de décharge très supérieur à celui des batteries conventionnelles, les spécialisant dans les applications requérant des sources de puissance élevée sur des temps courts. La spécificité d'une supercapacité est d'être un système d'accumulation de tension capacitif avec, comme pour tout condensateur, la quantité de charge électrostatique Q reliée à la tension U par l'équation Q = CU2/2.

Les supercondensateurs actuellement commercialisés sont typiquement constitués d'un élément cylindrique formé par l'enroulement sur lui-même d'un feuillet composé d'une feuille d'aluminium formant une anode, d'un séparateur en papier et d'une autre feuille d'aluminium formant une cathode. Les feuilles formant l'anode et la cathode subissant typiquement un traitement de surface pour favoriser la formation d'une fine couche d'alumine et surtout l'adhésion d'une couche active, comme par exemple une mousse de carbone. L'élément ainsi formé est ensuite imprégné d'un électrolyte et l'ensemble est enfermé dans un boitier étanche afin d'éviter l'évaporation de l'électrolyte en prévoyant, bien sûr, des moyens pour connecter l'anode et la cathode à un circuit électrique.

Du fait de cette technologie de construction par enroulement de films minces, la tension unitaire maximum d'une UCAP est aujourd'hui limitée à environ 2,7 Volts.

Or, pour de nombreuses utilisations et notamment les applications dans le domaine de l'automobile, une unité de stockage électrique comportant au moins une UCAP est incorporée dans un réseau dont les consommateurs demandent des tensions régulées fixes. De plus, ce réseau peut comporter une autre unité de stockage, telle une batterie électrochimique, capable de fournir une tension par exemple de l'ordre de 13 Volts.

Pour pouvoir charger (ou plus généralement élever, abaisser ou réguler la tension lors de la charge ou de la décharge), il est alors nécessaire de munir le réseau d'un ou plusieurs convertisseurs de tension de type DC/DC. Ces convertisseurs renchérissent fortement le coût d'une installation. De plus, ils complexifient la conception du réseau et la gestion des différentes unités consommatrices et/ou productrices d'électricité. Par ailleurs, ces convertisseurs doivent trouver une place, dans un espace qui peut être compté comme l'est notamment le volume sous capot dans un véhicule automobile. Il serait donc souhaitable de pouvoir simplifier l'architecture des réseaux, en autorisant notamment la suppression de ces convertisseurs de tension de type DC/DC.

Selon l'invention, ce but est atteint par la fourniture de cellules élémentaires destinées à être associées les unes avec les autres, chaque cellule élémentaire comportant une ligne de puissance reliant deux bornes de connexion, une unité de stockage électrique reliée aux bornes de la ligne de puissance par l'intermédiaire d'au moins un commutateur et d'une ligne de commande pour commander le ou les commutateurs et adaptée à la connexion à d'autres lignes de commande de cellules élémentaires. Il peut par ailleurs être avantageusement prévu des moyens pour forcer un commutateur en position déconnectée.

Selon certaines caractéristiques de l'invention, l'unité de stockage électrique comporte au moins un supercondensateur et/ou au moins une batterie électrochimique. Il est à noter que l'unité de stockage peut être notamment constituée par l'association en série ou en parallèle d'une pluralité de supercondensateurs et/ou de batteries. Lorsque l'unité de stockage comporte au moins un supercondensateur, des moyens de limitation de la tension aux bornes des supercondensateurs peuvent également être prévus.

La ligne de commande peut être une ligne filaire ou une ligne sans fil, la commande étant alors opérée par des ondes électromagnétiques comme par exemple des signaux radio ou lumineux. Par ailleurs la ligne de commande peut être intégrée à la ligne de puissance.

Dans un mode de réalisation tout particulièrement avantageux de l'invention, la cellule élémentaire comporte de plus un inverseur de polarité placé entre l'unité de stockage électrique et la ligne de puissance et associé à une ligne de commande.

Les commutateurs peuvent être, par exemple, constitués par des interrupteurs à commande électronique ou des relais électromécaniques.

Chaque cellule élémentaire est, selon l'invention, considérée comme un réservoir d'énergie indépendant, que l'on peut soit mettre en série, soit déconnecter, en fonction des besoins en tension, en mode charge et en mode décharge.

Ainsi, les cellules sont utilisées pour former des modules obtenus par la mise en série et/ou en parallèle des lignes de puissance d'au moins deux cellules élémentaires telles que définies précédemment, l'ensemble des cellules d'un même module étant associées à la même ligne de commande.

La ligne de commande, et donc l'ensemble des commutateurs - est contrôlée par une unité centrale. Cette unité centrale peut également gérer la détection du nombre de cellules présentes dans le module, ce qui est tout particulièrement avantageux pour les applications nécessitant un grand nombre de cellules et/ou un nombre fluctuant de cellules.

Chaque commutateur est conçu pour répondre à une commande qui lui est spécifique. Ceci peut être réalisé par exemple par l'intermédiaire de seuils de tension ou de trains d'impulsions.

Le module constitué par la mise en série d'une pluralité de cellules élémentaires permet de charger l'ensemble des unités de stockage électrique progressivement, en reliant un module comportant n cellules ayant chacune une tension unitaire maximale U_{n,max} inférieure à une source de tension U, et en opérant une série d'opération dé-commutant et re-commutant tour à tour une série de cellules unitaires de façon à incrémenter progressivement la charge de chacune des cellules unitaires, jusqu'à un niveau proche mais inférieur à sa tension unitaire maximale U_{n,max}. La somme des tensions unitaires des unités de stockages pouvant devenir supérieure à la tension U.

Lorsque les unités de stockage des cellules élémentaires sont du type UCAPs, la source de tension U est de préférence inférieure à la somme des tensions U_{n,max}, mais peut être éventuellement supérieure si les cellules sont équipées de moyens de limitation de la tension appliquée à chaque cellule.

D'autres avantages et particularités de l'invention ressortent de la description de modes de réalisation faite ci-après en référence aux dessins annexés dans lesquels :
- La figure 1 illustre une cellule unitaire dont l'unité de stockage peut être une Ucap fig 1A ou une batterie fig 1B.
- La figure 2 illustre un module de 3 cellules et son mode de commutation.
- La figure 3 illustre le fonctionnement d'un pack de 10 cellules en mode de régulation de tension en décharge, autour d'une tension de 12,5V.
- La figure 4 illustre une cellule unitaire équipée d'un inverseur de tension.
- La figure 5 illustre une sinusoïde simple obtenue avec deux cellules montées en série et équipées chacune d'un inverseur de tension.

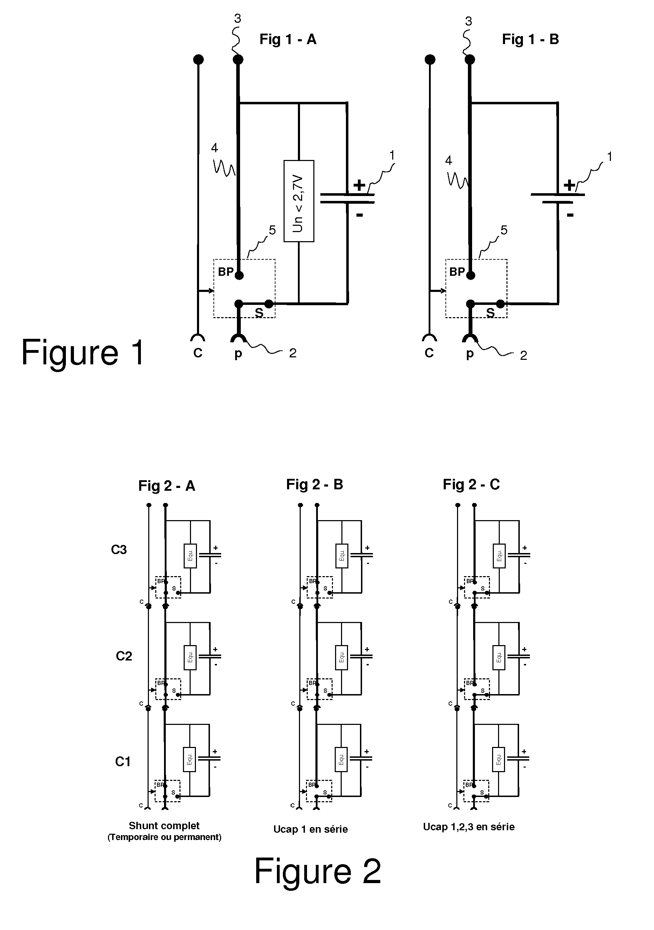

Un schéma de principe d'une cellule élémentaire selon l'invention est représenté aux figures 1A et 1B. La cellule est constituée par une unité de stockage électrique 1, montée en parallèle entre deux bornes 2, 3 d'une ligne de puissance 4, en interposant au moins un commutateur 5.

Dans le mode de réalisation proposé sur oe schéma, le commutateur est un interrupteur à 2 positions : S et BP, la borne correspondant à la position BP étant reliée à la ligne de puissance. Ainsi, lorsque l'interrupteur est en position BP, le courant peut passer d'une borne à l'autre de la ligne de puissance mais l'unité de stockage électrique est déconnectée. La position S correspond à la mise en série de l'unité de stockage. Lorsque l'unité de stockage est constituée par une UCAP, un système de limitation de tension pourra être prévu pour limiter la tension aux bornes de cette unité de stockage.

Dans une variante optionnelle de l'invention, non représentée ici, la position BP peut être forcée de manière à isoler temporairement ou définitivement une cellule sans empêcher le fonctionnement d'un module associant plusieurs cellules.

Cette cellule élémentaire comporte de plus une ligne de commande C pour placer l'interrupteur dans l'une des 2 positions en fonction d'un ordre envoyé par la ligne de commande. Cette ligne de commande est munie à ses extrémités de moyens de type prise femelle, prise mâle, pour associer deux lignes de commande en série comme il sera vu plus loin.

Les bornes aux extrémités d'une ligne de puissance, ici schématisées sous la forme d'une borne femelle pour le pôle négatif et d'une borne mâle pour le pôle positif permettent de monter en série des cellules, comme illustré par exemple à la figure 2, avec un module constitué par le montage en série de 3 cellules élémentaires, notées de bas en haut C1, C2 et C3. Par souci de simplification, sur cette figure 2 on a par ailleurs supposé que toutes les cellules d'un même module sont commandées par une ligne de commande unique, ce qui suppose différents niveaux de commande pour une reconnaissance individuelle par chaque cellule comme il sera détaillé plus bas. Pour autant, il est également possible de conserver une ligne de commande individuelle pour chaque cellule, ce qui permet d'utiliser des commutateurs tous identiques, mais ajoute nombre de lignes électriques au réseau.

Dans le mode de la figure 2-A, dit « mode by-pass complet », toutes les unités de stockage des cellules élémentaires sont déconnectées et la tension aux bornes du module est nulle.

Si maintenant on commande le commutateur d'une des cellules, (par exemple de la cellule C1 dans le mode illustré à la figure 2B), la tension aux bornes du module de 3 cellules sera comprise entre 0 et 2,7 Volts, suivant le niveau de charge de la capacité de la cellule mise en série.

Avec deux cellules mises en série, toujours en fonction du niveau de charge de la capacité des cellules mises en série, la tension aux bornes du module sera comprise entre 0 et 5,4 Volts. Et avec les 3 cellules montées en série comme dans le cas illustré à la figure 2C, la tension aux bornes du module va varier entre 0 et 8,1 Volts.

Pour faire varier le nombre de cellules mises en série dans un module, il faut pouvoir commander chaque commutateur plaçant l'unité de stockage en série (S) ou déconnectée (BP).

Selon l'invention, toutes les cellules utilisent la même ligne de commande sur laquelle le signal de commande est envoyé et auquel une ou plusieurs cellules vont répondre. Ceci peut être réalisé notamment par des signaux de commande constitués par des seuils de tension.

Une autre variante est constituée par des trains d'impulsions, ce qui permet une commande individuelle avec une ligne de commande unique. Cette variante, comme la première variante, permet plus de flexibilité dans la commande des cellules.

Les différents états ci-dessus montrent qu'il est possible de définir une tension, par seuils, en ajoutant ou en retranchant des unités de stockage (ou groupe d'unités de stockage).

Si on considère maintenant l'hypothèse où le module est connecté à une source de tension comme par exemple une batterie électrochimique conventionnelle 12,5 V d'un véhicule, on peut ainsi charger progressivement des unités de stockage, ici constitué d'un module de n UCAP, jusqu'à l'obtention d'une tension de charge du module égale à (ou du moins proche de) n fois la tension unitaire maximale de chaque unité de stockage.

Supposons en effet un module de 10 cellules, chaque cellule comportant une UCAP capable d'être chargée au maximum à 2,7 Volts, et dont la tension nominale maximum est de 2,5V. En mettant en série les 10 UCAP, on va ainsi charger toutes les UCAP à 1 /10 la tension de la batterie, soit 1,25 Volts. Cette valeur représentant moins de 50% de la tension nominale maximum. L'objet de la suite des commutations est de permettre la poursuite de la charge des cellules

Si maintenant une des cellules est déconnectée, les 12,5 Volts de la batterie vont être distribués sur les 9 cellules qui restent en série, qui voient donc leur charge croitre pour correspondre à une tension unitaire de 1,39 Volts. En remettant en série la cellule qui avait été déconnectée et en déconnectant une des autres cellules, on égalise à nouveau la charge de toutes les cellules à 1,39 Volts. La tension aux bornes du module est maintenant de 13,89 Volts.

En renouvelant l'opération en retirant successivement 3, 4 puis 5 cellules, comme illustré dans le tableau ci-après, on obtient un module dont la tension aux bornes est de 25 Volts, c'est-à-dire une tension finale bien supérieure à celle disponible grâce à la batterie ayant servie pour le chargement du module, tension correspondant à 10 UCAPs avec une charge de 2,5 Volts. Un retrait de 6 cellules conduirait à répartir la tension sur seulement 4 UCAPs qui verrait alors une tension unitaire de plus de 3 Volts, donc supérieure à la tension unitaire maximale.

Le tableau I, ci-dessous, donne un exemple de succession possible des commutations assurant la charge de 10 Ucaps avec une batterie à 12,5 Volts dans le cas où les cellules disposent d'une commande individuelle distincte. Comme le montre le tableau, la tension finale de charge du module est de 25V pour une tension de batterie de 12,5V.

**Tableau I**

| **Tension module** | **C1** | **C2** | **C3** | **C4** | **C5** | **C6** | **C7** | **C8** | **C9** | **C10** |
|---|---|---|---|---|---|---|---|---|---|---|
| | S | S | S | S | S | S | S | S | S | S |
| 12,5 | 1,25 | 1,25 | 1,25 | 1,25 | 1,25 | 1,25 | 1,25 | 1,25 | 1,25 | 1,25 |
| | S | S | S | S | S | S | S | S | S | BP |
| 13,75 | 1,39 | 1,39 | 1,39 | 1,39 | 1,39 | 1,39 | 1,39 | 1,39 | 1,39 | 1,25 |
| | S | S | S | S | S | S | S | S | BP | S |
| 13,89 | 1,39 | 1,39 | 1,39 | 1,39 | 1,39 | 1,39 | 1,39 | 1,39 | 1,39 | 1,39 |
| | S | S | S | S | S | S | S | S | BP | BP |
| 15,28 | 1,56 | 1,56 | 1,56 | 1,56 | 1,56 | 1,56 | 1,56 | 1,56 | 1,39 | 1,39 |
| | S | S | S | S | S | S | BP | BP | S | S |
| 15,63 | 1,56 | 1,56 | 1,56 | 1,56 | 1,56 | 1,56 | 1,56 | 1,56 | 1,56 | 1,56 |
| | S | S | S | S | S | S | S | BP | BP | BP |
| 17,19 | 1,79 | 1,79 | 1,79 | 1,79 | 1,79 | 1,79 | 1,79 | 1,56 | 1,56 | 1,56 |
| | S | S | S | S | BP | BP | BP | S | S | S |
| 17,86 | 1,79 | 1,79 | 1,79 | 1,79 | 1,79 | 1,79 | 1,79 | 1,79 | 1,79 | 1,79 |
| | S | S | S | S | S | S | BP | BP | BP | BP |
| 19,64 | 2,08 | 2,08 | 2,08 | 2,08 | 2,08 | 2,08 | 1,79 | 1,79 | 1,79 | 1,79 |
| | S | S | BP | BP | BP | BP | S | S | S | S |
| 20,83 | 2,08 | 2,08 | 2,08 | 2,08 | 2,08 | 2,08 | 2,08 | 2,08 | 2,08 | 2,08 |
| | S | S | S | S | S | BP | BP | BP | BP | BP |
| 22,92 | 2,50 | 2,50 | 2,50 | 2,50 | 2,50 | 2,08 | 2,08 | 2,08 | 2,08 | 2,08 |
| | BP | BP | BP | BP | BP | S | S | S | S | S |
| 25,00 | 2,50 | 2,50 | 2,50 | 2,50 | 2,50 | 2,50 | 2,50 | 2,50 | 2,50 | 2,50 |

La même séquence de charge avec des cellules disposant d'une commande de type seuils de tension est présentée au tableau Il. Pour ce tableau, on a supposé une alimentation avec une tension fixe de 12,5V. Toutes les cellules sont équipées d'un commutateur répondant à une tension de commande inférieure à 5V, de sorte que lorsqu'une tension Uc de 5 V est appliquée, toutes les cellules sont en série. Une cellule (en l'occurrence la C10) est déconnectée si la tension est inférieure à 4,5V. De même, la C9, est déconnectée pour une tension de commande de 4V, et ainsi de suite pour les cellules C8, C7 et C6 respectivement déconnectées pour une tension inférieure, à 3,5 V, 3 V et 2,5 V. A noter que pour plus de clarté, les cellules ont été disposées de façon à déconnecter successivement les cellules C10, C9, etc. mais en pratique l'ordre dans lequel sont disposés les cellules n'a pas d'importance.

Avec une commande par seuil de tension, il n'est pas possible de déconnecter la cellule C9 sans déconnecter la cellule C10. De même, la déconnexion de la cellule C8 suppose également une déconnexion des cellules C9 et C10. C'est pourquoi il est avantageux de prévoir des phases d'équilibrage pendant lesquelles tout ou partie du module est isolé de la source d'alimentation et tout ou partie des cellules sont à nouveau mises en série, de manière à homogénéiser la tension de tout ou partie des cellules du module. En pratique les phases d'équilibrage sont à réduire pour ne se faire que lorsque les énergies entre les cellules sont significativement différentes pour nécessiter une phase d'équilibrage.

**Tableau II**

| **UC** | **Tension module** | **C1** | **C2** | **C3** | **C4** | **C5** | **C6** | **C7** | **C8** | **C9** | **C10** | |
|---|---|---|---|---|---|---|---|---|---|---|---|---|
| **5V** | | S | S | S | S | S | S | S | S | S | S | |
| | 12,5 | 1,25 | 1,25 | 1,25 | 1,25 | 1,25 | 1,25 | 1,25 | 1,25 | 1,25 | 1,25 | |
| **4,5V** | | S | S | S | S | S | S | S | S | S | BP | |
| | 13,63 | 1,39 | 1,39 | 1,39 | 1,39 | 1,39 | 1,39 | 1,39 | 1,39 | 1,39 | 1,25 | |
| **5V** | | S | S | S | S | S | S | S | S | S | S | Equilibrage |
| | 13,63 | 1,36 | 1,36 | 1,36 | 1,36 | 1,36 | 1,36 | 1,36 | 1,36 | 1,36 | 1,36 | |
| **4V** | | S | S | S | S | S | S | S | S | BP | BP | |
| | 15,20 | 1,56 | 1,56 | 1,56 | 1,56 | 1,56 | 1,56 | 1,56 | 1,56 | 1,36 | 1,36 | |
| **5V** | | S | S | S | S | S | S | S | S | S | S | Equilibrage |
| | 15,20 | 1,52 | 1,52 | 1,52 | 1,52 | 1,52 | 1,52 | 1,52 | 1,52 | 1,52 | 1,52 | |
| **4V** | | S | S | S | S | S | S | S | S | BP | BP | |
| | 15,54 | 1,56 | 1,56 | 1,56 | 1,56 | 1,56 | 1,56 | 1,56 | 1,56 | 1,52 | 1,52 | |
| **3,5** | | S | S | S | S | S | S | S | BP | BP | BP | |
| | 17,10 | 1,79 | 1,79 | 1,79 | 1,79 | 1,79 | 1,79 | 1,79 | 1,56 | 1,52 | 1,52 | |
| **5V** | | S | S | S | S | S | S | S | S | S | S | Equilibrage |
| | 17,10 | 1,71 | 1,71 | 1,71 | 1,71 | 1,71 | 1,71 | 1,71 | 1,71 | 1,71 | 1,71 | |
| **3,5** | | S | S | S | S | S | S | S | BP | BP | BP | |
| | 17,63 | 1,79 | 1,79 | 1,79 | 1,79 | 1,79 | 1,79 | 1,79 | 1,71 | 1,71 | 1,71 | |
| **3V** | | S | S | S | S | S | S | BP | BP | BP | BP | |
| | 19,42 | 2,08 | 2,08 | 2,08 | 2,08 | 2,08 | 2,08 | 1,79 | 1,71 | 1,71 | 1,71 | |
| **5V** | | S | S | S | S | S | S | S | S | S | S | Equilibrage |
| | 19,42 | 1,94 | 1,94 | 1,94 | 1,94 | 1,94 | 1,94 | 1,94 | 1,94 | 1,94 | 1,94 | |
| **3V** | | S | S | S | S | S | S | BP | BP | BP | BP | |
| | 20,27 | 2,08 | 2,08 | 2,08 | 2,08 | 2,08 | 2,08 | 1,94 | 1,94 | 1,94 | 1,94 | |
| **2,5V** | | S | S | S | S | S | BP | BP | BP | BP | BP | |
| | 22,35 | 2,50 | 2,50 | 2,50 | 2,50 | 2,50 | 2,08 | 1,94 | 1,94 | 1,94 | 1,94 | |
| **5V** | | S | S | S | S | S | S | S | S | S | S | Equilibrage |
| | 22,35 | 2,23 | 2,23 | 2,23 | 2,23 | 2,23 | 2,23 | 2,23 | 2,23 | 2,23 | 2,23 | |
| **2,5V** | | S | S | S | S | S | BP | BP | BP | BP | BP | |
| | 24 | 2,50 | 2,50 | 2,50 | 2,50 | 2,50 | 2,23 | 2,23 | 2,23 | 2,23 | 2,23 | |
| **5V** | | S | S | S | S | S | S | S | S | S | S | Equilibrage |
| | 24 | 2,37 | 2,37 | 2,37 | 2,37 | 2,37 | 2,37 | 2,37 | 2,37 | 2,37 | 2,37 | |
| **2,5V** | | S | S | S | S | S | BP | BP | BP | BP | BP | |
| | 24,34 | 2,50 | 2,50 | 2,50 | 2,50 | 2,50 | 2,37 | 2,37 | 2,37 | 2,37 | 2,37 | |
| **5V** | | S | S | S | S | S | S | S | S | S | S | Equilibrage |
| | 24,34 | 2,43 | 2,43 | 2,43 | 2,43 | 2,43 | 2,43 | 2,43 | 2,43 | 2,43 | 2,43 | |

En généralisant à un nombre quelconque d'unités de stockage, on constate ainsi que selon l'invention, il est proposé un procédé pour charger un ensemble de n unités de stockage électrique admettant chacune une tension unitaire maximum u_{n,max}, caractérisé en ce que un nombre j (avec j inférieur ou égale à n), d'unités de stockage sont mises en série pour être alimenté sous la tension U, le nombre j étant adapté à la tension U et au niveau de charge des unités de stockage un de sorte que la somme des tensions unitaires des unités de stockage est inférieure ou égale à U et qu'aucune unité de stockage ne dépasse sa tension, unitaire maximum.

Le chargement sous tension U des unités de stockage peut être avantageusement poursuivi en excluant i unités de stockage, avec i tel que la somme des tensions unitaires des j-i unités de stockage est inférieure ou égale à U et qu'aucune unité de stockage ne dépasse sa tension, unitaire maximum.

Ainsi, pour charger un module de n unités de stockage électrique admettant chacune une tension unitaire maximale u_{n,max}, on place ainsi, sous une tension U, j des n cellules montées en série, puis j-1, j-2, ..., j-i.

Chaque phase d'exclusion d'une ou plusieurs unités de stockage peut être précédée et/ou suivie par une (ou plusieurs) phase d'isolation électrique et de mise en série de tout ou partie des n unités de stockage de manière à équilibrer la charge entre toute ou partie des n unités de stockage

Lorsque maintenant le module de n unités est utilisé comme une source d'énergie, il va bien sûr se produire une diminution de l'état des charges des cellules - et il est souhaitable de réguler la tension de sortie du module autour d'une valeur de consigne, fixe ou modulée, pour compenser la décharge, ou la chute de tension, dynamique des cellules.

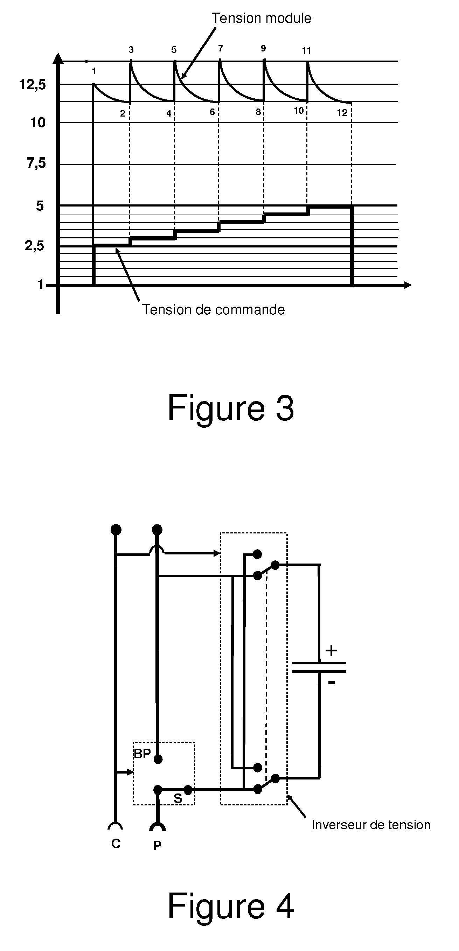

Le schéma proposé à la figure 3 illustre à nouveau le cas de 10 Ucaps fonctionnant en régulation de tension à 12,5V. Initialement, les Ucaps sont chargées à 2,5 Volts. Avec 5 Ucaps mises en série on dispose de la tension de consigne souhaitée de 12,5 V. (Point 1).

Après un temps correspondant à la décharge partielle des cellules déjà en séries, la tension du module diminue pour atteindre par exemple 11.8V (Point 2). Une Ucap supplémentaire est alors mise en série, ce qui conduit à une tension disponible supérieure à la tension de consigne (Point 3). La régulation se poursuit en ajoutant ainsi petit à petit de nouvelles cellules, jusqu'à ce que les 10 Ucap soient en série et que la tension devienne inférieure à la tension de 12V. Cette séquence de décharge a entraîné 5 commandes de commutations aux points 2,4 ,6 ,8 ,10.

Le tableau III - pendant du tableau I - illustre une mise en oeuvre possible de ce mode de décharge, dans l'hypothèse de 10 Ucaps fournissant une charge régulée de 12,5V (entre 11,25 V et 13,75 V) initialement toutes chargées à 2,5 V, chaque cellule étant pourvue d'une commande unique ou séparée. Le cas de la figure 3 décrit une commande par seuil de tension.

**Tableau III**

| **Tension module** | **C1** | **C2** | **C3** | **C4** | **C5** | **C6** | **C7** | **C8** | **C9** | **C10** |
|---|---|---|---|---|---|---|---|---|---|---|
| | BP | BP | BP | BP | BP | BP | BP | BP | BP | BP |
| 0 | 2,5 | 2,5 | 2,5 | 2,5 | 2,5 | 2,5 | 2,5 | 2,5 | 2,5 | 2,5 |
| | S | S | S | S | S | BP | BP | BP | BP | BP |
| 12,50 | 2,5 | 2,5 | 2,5 | 2,5 | 2,5 | 2,5 | 2,5 | 2,5 | 2,5 | 2,5 |
| | S | S | S | S | S | BP | BP | BP | BP | BP |
| 11,25 | 2,25 | 2,25 | 2,25 | 2,25 | 2,25 | 2,5 | 2,5 | 2,5 | 2,5 | 2,5 |
| | S | S | S | S | S | S | BP | BP | BP | BP |
| 13,75 | 2,25 | 2,25 | 2,25 | 2,25 | 2,25 | 2,50 | 2,5 | 2,5 | 2,5 | 2,5 |
| | S | S | S | S | S | S | BP | BP | BP | BP |
| 11,25 | 1,88 | 1,88 | 1,88 | 1,88 | 1,88 | 1,88 | 2,5 | 2,5 | 2,5 | 2,5 |
| | S | S | S | S | S | S | S | BP | BP | BP |
| 13,78 | 1,88 | 1,88 | 1,88 | 1,88 | 1,88 | 1,88 | 2,50 | 2,5 | 2,5 | 2,5 |
| | S | S | S | S | S | S | S | BP | BP | BP |
| 11,27 | 1,61 | 1,61 | 1,61 | 1,61 | 1,61 | 1,61 | 1,61 | 2,5 | 2,5 | 2,5 |
| | S | S | S | S | S | S | S | S | BP | BP |
| 13,77 | 1,61 | 1,61 | 1,61 | 1,61 | 1,61 | 1,61 | 1,61 | 2,50 | 2,5 | 2,5 |
| | S | S | S | S | S | S | S | S | BP | BP |
| 11,20 | 1,40 | 1,40 | 1,40 | 1,40 | 1,40 | 1,40 | 1,40 | 1,40 | 2,5 | 2,5 |
| | S | S | S | S | S | S | S | S | S | BP |
| 13,70 | 1,40 | 1,40 | 1,40 | 1,40 | 1,40 | 1,40 | 1,40 | 1,40 | 2,50 | 2,5 |
| | S | S | S | S | S | S | S | S | S | BP |
| 11,25 | 1,25 | 1,25 | 1,25 | 1,25 | 1,25 | 1,25 | 1,25 | 1,25 | 1,25 | 2,5 |
| | S | S | S | S | S | S | S | S | S | S |
| 13,75 | 1,25 | 1,25 | 1,25 | 1,25 | 1,25 | 1,25 | 1,25 | 1,25 | 1,25 | 2,50 |
| | S | S | S | S | S | S | S | S | S | S |
| 11,20 | 1,12 | 1,12 | 1,12 | 1,12 | 1,12 | 1,12 | 1,12 | 1,12 | 1,12 | 1,12 |

Le tableau IV - pendant du tableau II - est de même un exemple d'illustration du mode de décharge avec des cellules pourvues de commande indépendantes, toujours pour fournir une charge régulée de 12,5V (entre 11,25 V et 13,50 V) à partir d'un module dont toutes les Ucaps sont initialement chargées à 2,5 V.

**Tableau IV**

| **Tension module** | **C1** | **C2** | **C3** | **C4** | **C5** | **C6** | **C7** | **C8** | **C9** | **C10** |
|---|---|---|---|---|---|---|---|---|---|---|
| | BP | BP | BP | BP | BP | BP | BP | BP | BP | BP |
| 0 | 2,50 | 2,50 | 2,50 | 2,50 | 2,50 | 2,50 | 2,50 | 2,50 | 2,50 | 2,50 |
| | S | S | S | S | S | BP | BP | BP | BP | BP |
| 12,50 | 2,50 | 2,50 | 2,50 | 2,50 | 2,50 | 2,50 | 2,50 | 2,50 | 2,50 | 2,50 |
| | S | S | S | S | S | BP | BP | BP | BP | BP |
| 11,25 | 2,25 | 2,25 | 2,25 | 2,25 | 2,25 | 2,50 | 2,50 | 2,50 | 2,50 | 2,50 |
| | BP | BP | BP | BP | BP | S | S | S | S | S |
| 12,50 | 2,25 | 2,25 | 2,25 | 2,25 | 2,25 | 2,50 | 2,50 | 2,50 | 2,50 | 2,50 |
| | BP | BP | BP | BP | BP | S | S | S | S | S |
| 11,25 | 2,25 | 2,25 | 2,25 | 2,25 | 2,25 | 2,25 | 2,25 | 2,25 | 2,25 | 2,25 |
| | S | S | S | S | S | S | BP | BP | BP | BP |
| 13,50 | 2,25 | 2,25 | 2,25 | 2,25 | 2,25 | 2,25 | 2,25 | 2,25 | 2,25 | 2,25 |
| | S | S | S | S | S | S | BP | BP | BP | BP |
| 11,28 | 1,88 | 1,88 | 1,88 | 1,88 | 1,88 | 1,88 | 2,25 | 2,25 | 2,25 | 2,25 |
| | BP | BP | BP | BP | S | S | S | S | S | S |
| 12,76 | 1,88 | 1,88 | 1,88 | 1,88 | 1,88 | 1,88 | 2,25 | 2,25 | 2,25 | 2,25 |
| | BP | BP | BP | BP | S | S | S | S | S | S |
| 11,28 | 1,88 | 1,88 | 1,88 | 1,88 | 1,88 | 1,88 | 1,88 | 1,88 | 1,88 | 1,88 |
| | S | S | S | S | S | S | S | BP | BP | BP |
| 13,16 | 1,88 | 1,88 | 1,88 | 1,88 | 1,88 | 1,88 | 1,88 | 1,88 | 1,88 | 1,88 |
| | S | S | S | S | S | S | S | BP | BP | BP |
| 11,27 | 1,61 | 1,61 | 1,61 | 1,61 | 1,61 | 1,61 | 1,61 | 1,88 | 1,88 | 1,88 |
| | BP | BP | S | S | S | S | S | S | S | S |
| 13,69 | 1,61 | 1,61 | 1,61 | 1,61 | 1,61 | 1,61 | 1,61 | 1,88 | 1,88 | 1,88 |
| | BP | BP | S | S | S | S | S | S | S | S |
| 11,28 | 1,61 | 1,61 | 1,41 | 1,41 | 1,41 | 1,41 | 1,41 | 1,41 | 1,41 | 1,41 |
| | S | S | S | S | S | S | S | S | S | BP |
| 13,09 | 1,61 | 1,61 | 1,41 | 1,41 | 1,41 | 1,41 | 1,41 | 1,41 | 1,41 | 1,41 |
| | S | S | S | S | S | S | S | S | S | BP |
| 11,25 | 1,25 | 1,25 | 1,25 | 1,25 | 1,25 | 1,25 | 1,25 | 1,25 | 1,25 | 1,41 |
| | S | S | S | S | S | S | S | S | S | S |
| 12,66 | 1,25 | 1,25 | 1,25 | 1,25 | 1,25 | 1,25 | 1,25 | 1,25 | 1,25 | 1,41 |
| | S | S | S | S | S | S | S | S | S | S |
| 11,25 | 1,13 | 1,13 | 1,13 | 1,13 | 1,13 | 1,13 | 1,13 | 1,13 | 1,13 | 1,13 |

En généralisant, l'invention propose ainsi également un procédé pour réguler la fourniture d'une tension de consigne U à partir de n unités de stockage, caractérisé en ce que l'on place en série j unités de stockage de sorte que la somme des tensions unitaires des unités de stockage est voisine de U, et on ajoute une ou plusieurs unités de stockage mises en série au fur et à mesure que les unités de stockage se déchargent afin de maintenir une tension voisine de la tension de consigne U. Chaque ajout d'une ou plusieurs unités peut être précédé ou suivi par une phase d'isolation électrique et de mise en série de tout ou partie des n unités de stockage de manière à équilibrer la charge entre toute ou partie des n unités de stockage.

Dans une autre variante de l'invention, illustrée à la figure 4, la cellule unitaire comporte de plus un inverseur de polarité, avec l'ajout d'une première ligne de courants

Dans cette configuration, l'électronique de chaque cellule est plus complexe puisque l'inversion de polarité nécessite plusieurs interrupteurs supplémentaires, par cellule.

La commande des cellules peut se faire suivant le même principe que précédemment avec, par exemple, un signal en -5V / 5V au lieu de 0 / 5V. Le tableau V ci-dessous donne un exemple de commutation de 2 cellules ayant chacune une tension unitaire maximale de 2,5 V.

**Tableau V**

| Pôle de connexion (pour les cellules en série) | | **Etat C1** | **cellule C2** | **Tension pack (1)** |
|---|---|---|---|---|
| | | | | **Pack** |
| **Connexion avec U+** | **_{P} = 5 V** | **S** | **S** | **5 V** |
| **Connexion avec U+** | **_{P} = 2,5V** | **S** | **BP** | **2,5 V** |
| | **P = 0V** | **BP** | **BP** | **0 V** |
| **Connexion avec U-** | **_{P} = -2,5 V** | **S** | **BP** | **- 2,5 V** |
| **Connexion avec** | **U- _{P} = - 5 V** | **S** | **S** | **- 5 V** |

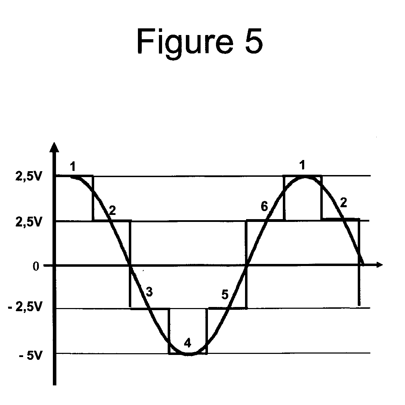

Ce type de commutation rend possible la génération de différents types de signaux électriques comme par exemple une sinusoïde telle qu'illustrée par la figure 5.

Dans ce qui précède, nous avons toujours supposé connu le nombre de cellules dans un module. En pratique, certaines cellules peuvent être manquantes ou forcées en mode déconnecté. C'est pourquoi, il peut être avantageux de prévoir une unité centrale capable de détecter automatiquement le nombre de cellules effectivement présentes et actives dans le module. Ceci peut être obtenu par exemple, par la lecture des créneaux de montée en tension lors d'un balayage des commandes du nombre maximum des cellules élémentaires gérables par l'unité centrale.

## Revendications

1. Cellule élémentaire comportant :
• une ligne de puissance reliant deux bornes de connexion pour la connexion à d'autres lignes de puissance de cellules élémentaires;
• une unité de stockage électrique, reliée aux bornes de la ligne de puissance par l'intermédiaire d'au moins un commutateur pour placer l'unité de stockage en série (S) ou déconnectée (BP) de la ligne de puissance ;
• une ligne de commande pour commander le ou les commutateurs, ladite ligne de commande comportant deux bornes de connexion pour l'association à des lignes de commandes d'autres cellules élémentaires.

2. Cellule élémentaire selon la revendication 1, **caractérisée en ce que** la ligne de commande est intégrée à la ligne de puissance.

3. Cellule élémentaire selon l'une quelconque des revendications précédentes, **caractérisée en ce que** la cellule comporte de plus des moyens pour forcer le commutateur en position déconnectée.

4. Cellule élémentaire selon l'une quelconque des revendications précédentes, **caractérisée en ce qu'**elle comporte de plus un inverseur de polarité placé entre l'unité de stockage électrique et la ligne de puissance et associé à une ligne de commande.

5. Cellule élémentaire selon l'une quelconque des revendications précédentes, **caractérisée en ce que** l'unité de stockage électrique comporte au moins une batterie électrochimique.

6. Cellule élémentaire selon l'une quelconque des revendications précédentes, **caractérisée en ce que** l'unité de stockage électrique comporte au moins un condensateur ou au moins un supercondensateur.

7. Cellule élémentaire selon la revendication 5 ou la revendication 6, **caractérisée par** des moyens de limitation de la tension aux bornes du ou des condensateurs ou supercondensateurs.

8. Module constitué par la mise en série et/ou en parallèle des lignes de puissance d'au moins deux cellules élémentaires selon l'une quelconque des revendications précédentes, une même ligne de puissance et une même ligne de commande étant partagée par une pluralité de cellules élémentaires.

9. Module selon la revendication 8, **caractérisé en ce que** les commutateurs des cellules élémentaires partageant une même ligne de commande répondent à des commandes électriques spécifiques à une ou plusieurs cellules élémentaires.

10. Module selon la revendication 9, **caractérisé en ce que** lesdites commandes électriques spécifiques sont des trains d'impulsions et/ou des seuils de tension.

11. Module suivant l'une quelconque des revendications 8 à 10, **caractérisé en ce qu'**il comporte une unité centrale capable de commander la commutation de tout ou partie des commutateurs des unités de puissance des cellules constituant le module.

12. Module suivant la revendication 11, **caractérisé en ce que** ladite unité centrale est de plus capable de détecter automatiquement le nombre de cellules présentes dans le module.

13. Procédé pour charger un module selon l'une quelconque des revendications 8 à 12, comportant n cellules avec n unités de stockage électrique admettant chacune une tension unitaire maximum u_{n,max}, **caractérisé en ce que** un nombre j (avec j inférieur ou égale à n), d'unités de stockage sont mises en série pour être alimenté sous la tension U, le nombre j étant adapté à la tension U et au niveau de charge des unités de stockage uₙ de sorte que la somme des tensions unitaires des unités de stockage est inférieure ou égale à U et qu'aucune unité de stockage ne dépasse sa tension unitaire maximum.

14. Procédé selon la revendication 13, selon lequel le chargement sous tension U des unités de stockage est poursuivi en excluant i unités de stockage, avec i tel que la somme des tensions unitaires des j-i unités de stockage est inférieure ou égale à U et qu'aucune unité de stockage ne dépasse sa tension, unitaire maximum.

15. Procédé suivant revendication 14 **caractérisé en ce que** chaque phase d'exclusion d'une ou plusieurs unités de stockage est précédée ou suivie par une phase d'isolation électrique et de mise en série de tout ou partie des n unités de stockage de manière à équilibrer la charge entre toute ou partie des n unités de stockage.

16. Procédé pour réguler la fourniture d'une tension de consigne U à un module selon l'une quelconque des revendications 8 à 12 comportant n unités de stockage, **caractérisé en ce que** l'on place en série j unités de stockage de sorte que la somme des tensions unitaires des unités de stockage est voisine de U, et on ajoute une ou plusieurs unités de stockage mises en série au fur et à mesure que les unités de stockage se déchargent afin de maintenir une tension voisine de la tension de consigne U.

17. Procédé suivant revendication 16 **caractérisé en ce que** chaque ajout d'une ou plusieurs unités est précédé ou suivi par une phase d'isolation électrique et de mise en série de tout ou partie des n unités de stockage de manière à équilibrer la charge entre toute ou partie des n unités de stockage.
